# EUROPEAN PATENT APPLICATION

(11) **EP 2 128 932 A2**
(43) Date of publication of application: **02.12.2009**
(21) Application number: 09380030.8
(22) Date of filing: 25.02.2009
(51) Int. Cl.: H01R 4/36

(54) **A mechanical compression electric connector for electric conductors**

(30) Priority: 27.05.2008 ES 200801572
(71) Applicant: Ridelin, S.L., 08240 Manresa (Barcelona) (ES)
(72) Inventor: Capelles de la Fuente, Rosa, E-08240 Manresa (Barcelona) (ES)
(74) Representative: Aragones Forner, Rafael Angel

(57) **Abstract**

The connector comprises a connector body (5) whose inner cylindrical bore (2) is fit to house the conductor (E/C) being the object of the connection, one or several dynamometric clamping screws (4) being fit to be threadingly engaged into the respective drilled hole (3) of those being provided in the lateral wall (6) of the connector body (5), and a pressure-deformable contact strip (7) being such as to be interposed and establish the electric contact between the housed conductor (E/C) and the connector body (5) through the clamping screws (4), these latter when being tightened plastically deforming the contact strip (7) and thus adapting it onto the conductor (E/C) of any diameter, when the preset clamping torque has been reached the clamping screws (4) breaking and thus leaving the severed portions (41) being threadingly fixed in the drilled holes (3) arranged in an innerly nested arrangement as related to the outer surface of the connector (1).

## Description

### OBJECT OF THE INVENTION

The present invention has as its object a mechanical compression electric connector for electric conductors which is applicable to all types of electric connections for splicing, branching and termination purposes.

### FIELD OF THE INVENTION

The electric connector of the present invention allows to carry out all types of electrical connecting operations for splicing, branching and termination purposes in public and private facilities using electric wiring in thoroughfares, industrial estates, manufacturing plants of all types, and pastime grounds.

### BACKGROUND OF THE INVENTION

There exist many types of connectors for multiple applications.

The electric connectors to which the present invention relates comprise an elongated connector body having an axially extending, cylindrical bore being open at one end through which the "stripped" or "peeled" end of the electric conductor to be connected and having been stripped of the insulation is introduced, said end of the conductor being thus housed in said bore, said connector body being provided with one or several threaded drilled holes extending through the side wall and opening into said bore, respective clamping screws being provided for being threadingly engaged into the aforementioned threaded drilled holes and when being screwed in thus clamping and keeping in a fixed position the aforementioned end of the conductor or cable in the bore of the connector body and thus establishing the electric contact between the connector body and the conductor, in order to establish the desirable connections between said conductor and another conductor or other conductors or cables by means of said connector body.

In these electric connectors the connection is established by direct contact between the clamping screw and the conductor being introduced in the connector body, this bringing about a friction between the screw and the conductor due to the action being directly exerted by the screw on the surface of the conductor during the screwing-in of said screw, said direct action possibly damaging the conductor itself or even causing the breakage of the wires making it up, with the consequent loss of electrical cross-section.

### SUMMARY OF THE INVENTION

The aforementioned drawback has been now totally obviated by means of the connector being the object of the present invention, wherein the mechanical pressure being exerted by the clamping screw as necessary to establish the electric connection is not directly applied to the conductor but onto a deformable contact strip in its turn transmitting it onto the conductor, this latter being thus preserved from any damages possibly affecting its electrical characteristics. The mechanical compression electric connector for electric conductors which is the object of the invention is essentially **characterised in that** it comprises a connector body whose inner cylindrical bore is fit to house the conductor being the object of the connection, at least one dynamometric clamping screw being fit to be threadingly engaged into the respective drilled hole of those being provided in the lateral wall of the connector body, and a pressure-deformable contact strip being such as to be interposed and establish the electric contact between the housed conductor and the connector body through the clamping screws, these latter when being tightened plastically deforming the contact strip and thus adapting it onto a conductor of any diameter as in a by way of punching operation, when the preset clamping torque has been reached the screws breaking and being thus left in an innerly nested arrangement as related to the outer surface of the connector.

The contact strip being plastically deformable and interposed between the clamping screws and the connection conductor being housed in the connector allows the connection of conductors or cables of different diameters.

The electric connector of the present invention is applicable to all types of electric connections for splicing, branching and termination purposes.

These and other characterising features will be best made apparent by the following detailed description whose understanding will be made easier by the accompanying two sheets of drawings showing a practical embodiment being cited only by way of example not limiting the scope of the present invention.

### DESCRIPTION OF THE DRAWINGS

In said drawings:

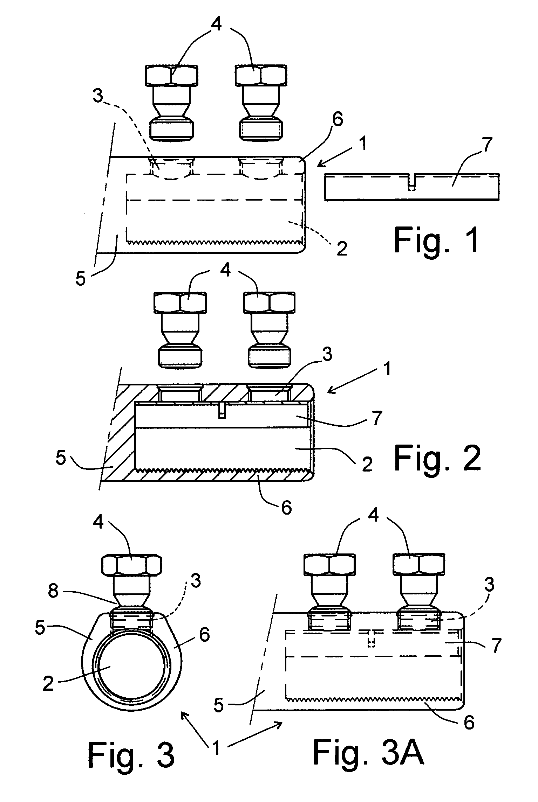

Fig. 1 is a fragmentary side elevation of the connector body of the present invention in an exploded arrangement showing the clamping screws and the contact strip.
Fig. 2 is a view being similar to that of Fig. 1 and showing the fragmentary connector body in a longitudinal section and with the contact strip positioned in the inside of the cylindrical bore of the connector body.
Fig. 3 is an elevational end view of the connector showing the clamping screws when having been screwed-in into the respective drilled holes, before starting to be threadingly tightened.
Fig. 3A is a side elevational view of Fig. 3 being similar to Fig. 1 but showing the contact strip in position as shown in Fig. 2, and the clamping screws as illustrated in the position of Fig. 3, when having been screwed-in into the drilled holes, but before starting to be tightened in order to carry out the connection of the corresponding conductor.
Fig. 4 is a side elevational view being similar to Fig. 3A and showing the "peeled" end of the conductor having been stripped of the insulation, said end being thus ready for its introduction into the cylindrical bore of the connector body.
Fig. 5 is a side elevational view during the carrying out of the connection of the conductor to the electric connector showing the clamping operation being carried out by means of threadingly tightening the clamping screws, these latter thus plastically deforming the contact strip and thus adapting it onto the "peeled" end of the conductor.
Fig. 6 is an elevational end view of the connector after having carried out the connection and with the clamping screws removed from the connector after having exerted the preset clamping torque and having thus brought about the breakage of said screws, but with the threaded portions being kept inside the respective drilled holes and without projecting from the outer surface of the connector, this view showing the adaptation by deformation of the contact strip onto the end of the conductor.

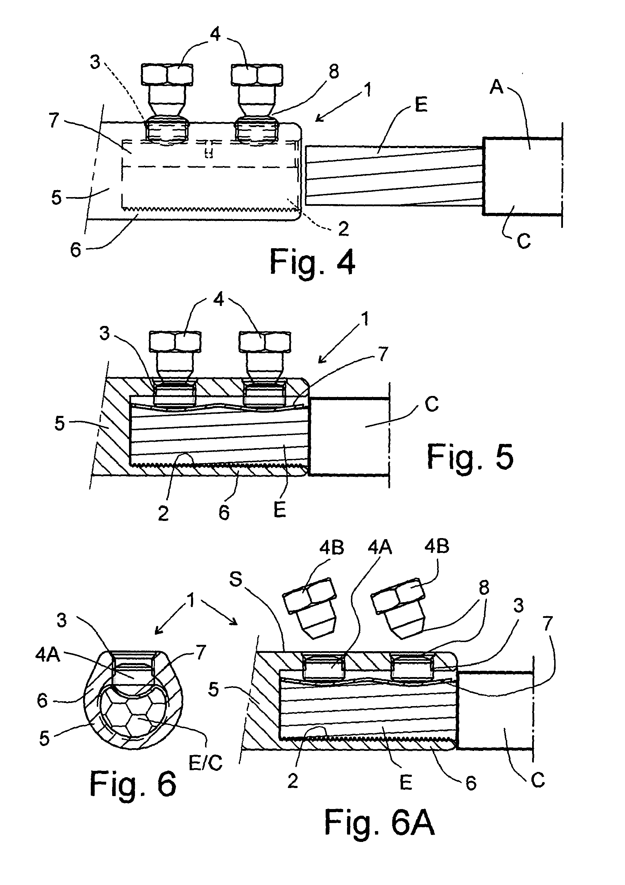

Fig. 6A is a sectional side elevation being similar to Fig. 5 and showing the electric connector after having carried out the connection, wherein the "peeled" end of the conductor is fully introduced in the cylindrical bore of the connector body and is being securedly fixed and kept in position by the clamping screws, these latter having exerted the preset clamping torque up to their breakage, their threaded portions being threadingly engaged in the drilled holes and arranged in such a way that they do not project from the outer surface of the connector, the contact strip being shown in its interposed arrangement and in such a state having been plastically deformed and adapted onto said introduced end of the conductor by the action of the clamping screws.

### DETAILED DESCRIPTION OF A PREFERED EMBODIMENT OF THE INVENTION

According to the drawings the mechanical compression electric connector for electric conductors which is generally denoted at -1- as per the present invention belongs to the type of electric connectors being provided with an inner cylindrical bore -2- for housing the "peeled" end -E- of the conductor -C- (i.e. the end having been stripped of the insulation -A-), and with threaded drilled holes -3- being provided in the side wall for housing the respective clamping screws -4- being operable for clamping the electric conductor -C- and establishing the contact with it.

The present invention has as its object a connector -1- comprising a connector body -5- whose inner cylindrical bore -2- is fit to house the "peeled" end -E-of the conductor -C- being the object of the connection, and one or several (2) dynamometric clamping screws -4- being fit to be threadingly engaged into the respective drilled hole -3- of the drilled holes -3- having been previously provided in the side wall of the connector body -5-.

The connector -1- of the invention comprises a pressure-deformable contact strip -7- which is fit to be interposed and establish the electric contact between the end -E- of the housed conductor -C- and the connector body -5- through the clamping screws -4-.

Fig. 4 illustrates the position existing before the introduction of the conductor -C-, and more specifically of the "peeled" end -E- having been stripped of the conventional insulation -A- of the electric conductors of this type, before carrying out the connection. In said introduction the contact strip -7- is arranged in an interposed arrangement between the forward ends of the clamping screws -4- and the "peeled" end -E- of the conductor -C-.

Fig. 5 illustrates an intermediary stage in the carrying out of the aforementioned connection, wherein when starting to carry out the clamping operation the clamping screws in a plastic manner deform the contact strip -7- and in a by way of punching operation have it progressively adapted onto the end -E- of the conductor - C-, which can have any diameter.

When concluding the connecting operation, as illustrated in Figs. 6 and 6A, when being screwed-in into the drilled holes -3- the clamping screws -4- reach the preset clamping torque and are thus broken, but the severed portions -4A- of the clamping screws which are threadingly engaged in the drilled holes -3- are in such a state applied against the contact strip -7- and thus keep in position the end -E- of the conductor -C-, said severed portions being thus left in an innerly nested arrangement as related to the outer surface of the connector -1-, whereas the remaining severed portions - 4B- can be discarded.

As has been illustrated and described, the contact strip -7- being incorporated for the connector -1- of the invention is plastically deformable and is to be arranged in an interposed arrangement between the clamping screws -4- and the end -E- of the connecting conductor being housed in the bore -2-, said arrangement allowing the electric connector of the invention to be in a position to carry out the connection of conductors or cables of different diameters.

As has been explained, since the clamping torque has a preset value that depends on the necked-down portion, when during the clamping operation when tightening the aforementioned screws the preset clamping torque is reached said screws are broken and the severed portions - 4A- are thus left in a threadingly fixed arrangement in the drilled holes -3- of the connector body -5-, and the severance plane -8- at the necked-down portion is left in an innerly nested arrangement and does not project from the outer surface -S- of the connector body, as can be perfectly seen in Figs. 6 and 6A, the severed free portions -4B- being then removed.

It can be pointed out that the mechanical compression electric connector for electric conductors of the present invention is perfectly applicable to all types of electric connections for splicing, branching and termination purposes.

It can be pointed out that the clamping screws -4- of the electric connector -1- of the invention are of this very applicant and are being used in other electric connectors.

The contact strip -7- is made of a plastically deformable material and is fit to be adapted to the surface of the end of the conductor through the clamping action of the screws -4-.

## Claims

1. A mechanical compression electric connector for electric conductors which is provided with an inner cylindrical bore (2) for housing the conductor (C), and threaded drilled holes (3) in the lateral wall (6) for housing the respective clamping screws (4) being operable for exerting on the contact strip (7) the axial force being necessary for establishing the contact with the electric conductor (C), **characterised in that** the connector comprises a connector body (5) whose inner cylindrical bore (2) is fit to house the conductor (E/C) being the object of the connection, at least one dynamometric clamping screw (4) being fit to be threadingly engaged into the respective drilled hole (3) of those being provided in the lateral wall (6) of the connector body (5), and a pressure-deformable contact strip (7) being such as to be interposed and establish the electric contact between the housed conductor (E/C) and the connector body (5) through the clamping screws (4), these latter when being tightened plastically deforming the contact strip (7) and thus adapting it onto the conductor (E/C) of any diameter as in a by way of punching operation, when the preset clamping torque has been reached the clamping screws (4) breaking and thus leaving the severed portions (4A) being threadingly fixed in the drilled holes (3) arranged in an innerly nested arrangement as related to the outer surface (S) of the connector (1).

2. A mechanical compression electric connector for electric conductors, as per claim 1, **characterised in that** the deformable contact strip (7) being interposed between the clamping screws (4) and the connection conductor (E/C) being housed in the connector allows the connection of conductors or cables (C) of different diameters.

3. A mechanical compression electric connector for electric conductors, as per the foregoing claims, **characterised in that** it is applicable to all types of electric connections for splicing, branching and termination purposes.
